# EUROPEAN PATENT SPECIFICATION

(11) **EP 1 407 581 B1**
(45) Date of publication and mention of the grant of the patent: **10.06.2009**
(21) Application number: 02741075.2
(22) Date of filing: 02.07.2002
(51) Int. Cl.: H04L 12/56

(54) **GATEWAY FOR INTERCONNECTING NETWORKS**
GATEWAY ZUR VERBINDUNG VON NETZEN
PASSERELLE POUR INTERCONNEXION DE RESEAU

(30) Priority: 10.07.2001 EP 01202642
(43) Date of publication of application: 14.04.2004
(73) Proprietor: Koninklijke Philips Electronics N.V., 5621 BA Eindhoven (NL)
(72) Inventor: VERBERKT, Mark, H., NL-5656 AA Eindhoven (NL); BERKVENS, Winfried, A., H., NL-5656 AA Eindhoven (NL); SZOSTEK, Lukasz, M., NL-5656 AA Eindhoven (NL)
(74) Representative: Damen, Daniel Martijn
(86) International application number: PCT/IB2002/002632
(87) International publication number: WO 2003/010925

(56) References cited:
- WO-A-02/25869
- WO-A-99/56433
- US-A1- 2002 191 622
- US-B1- 6 175 569

## Description

The invention relates to a gateway for interconnecting first and second networks, the gateway comprising first and second quality of service translation means and interconnection means for interconnecting the first and second quality of service translation means, wherein the first quality of service translation means are arranged for receiving input data having an associated input quality of service from the first network and for translating the input data into interconnection data having an associated interconnection quality of service, and wherein the first quality of service translation means are further arranged for supplying the interconnection data to the interconnection means, wherein the interconnection means are arranged for receiving the interconnection data from the first quality of service translation means and for supplying the interconnection data to the second quality of service translation means, and wherein the second quality of service translation means are arranged for receiving the interconnection data from the interconnection means and for translating the interconnection data into output data having an associated output quality of service, wherein the second quality of service translation means are further arranged for supplying the output data to the second network.

The invention further relates to a transmission system comprising such a gateway and to a method of interconnecting first and second networks.

Such gateways or routers may be used, for example, for interconnecting multiple in-home networks and multiple access networks. The Internet is changing the way people communicate, do business, entertain themselves. A growing demand for bandwidth and a deregulation of the telecommunication market have resulted in a proliferation of different types of access networks. There are already several coexisting access networks technologies available, and a growing number of service providers makes it likely that in the near future a number of different digital networks will be entering every house.

The variety of existing access networks is already significant. There are three prevailing media in use: coaxial cable TV networks, phone lines, and wireless solutions: GSM, satellite broadcast and terrestrial broadcast. Furthermore, different protocols are used in the above-mentioned networks. Cable TV, terrestrial, and satellite networks are used mainly for delivery of analog and digital video programs, and only part of the bandwidth is used for data transmission. The delivery of data together with digital video programs is standardized quite well by the DVB and DOCSIS standards, but analog service providers still implement their own, proprietary standards. This situation is caused by the lack of a widely accepted standard for adapting existing analog networks for data delivery. Phone lines nowadays more and more often carry data along with voice. Currently, the analog modem is still the most frequently used device with the ISDN modem being an alternative. But what customers want is a broadband technology that allows constant access to data without blocking voice services. The technology gaining momentum right now is DSL with its variations. More new access technologies are expected to emerge in the near future. The one that is most promising is FITL (Fiber In The Loop). Optical fibers which now form a part of every digital network will expand and eventually reach customers' homes. In areas where installation of fiber is expensive or difficult, a wireless high-bandwidth solution is expected to be employed.

Simultaneously with the expansion of access networks, there is an explosion of interest around home networking. Many customers are interested in connecting their home networks with access networks. 'Internet access', 'connecting a laptop from work' and 'remote monitoring and security' are examples of services that need a connection going outside the house.

The main problem from the customers' point of view is that most of the in-home and access networks are incompatible with each other. Networks provide different services, have different bandwidths, properties, and applications. Some of the networks need experienced and knowledgeable administrators for installation, management or service. Obviously, this is not what the customers want. The customers want a simple, easy to use (possibly plug-and-play), inexpensive environment which will integrate all the services and networks, and will allow their expansion and upgrade in the future. All services should be available for use at any place within a house area with the use of uniform and user-friendly interfaces. The in-home infrastructure should also be accessible for privileged users from outside the house and, at the same time, protected against eavesdroppers and hackers. The challenge is to hide all these technical details and problems from the customer.

The customers are not the only party which is not satisfied with the current situation. Service providers would like to be able to provide a broader range of services than is possible now. In order to deliver more services, they need a low-cost hardware platform that allows an easy upgrade and an agreed-upon standard for manufacturers. The manufacturers, in turn, need a standard interface specification agreed on by service providers, customer premises equipment manufacturers and home automation industries.

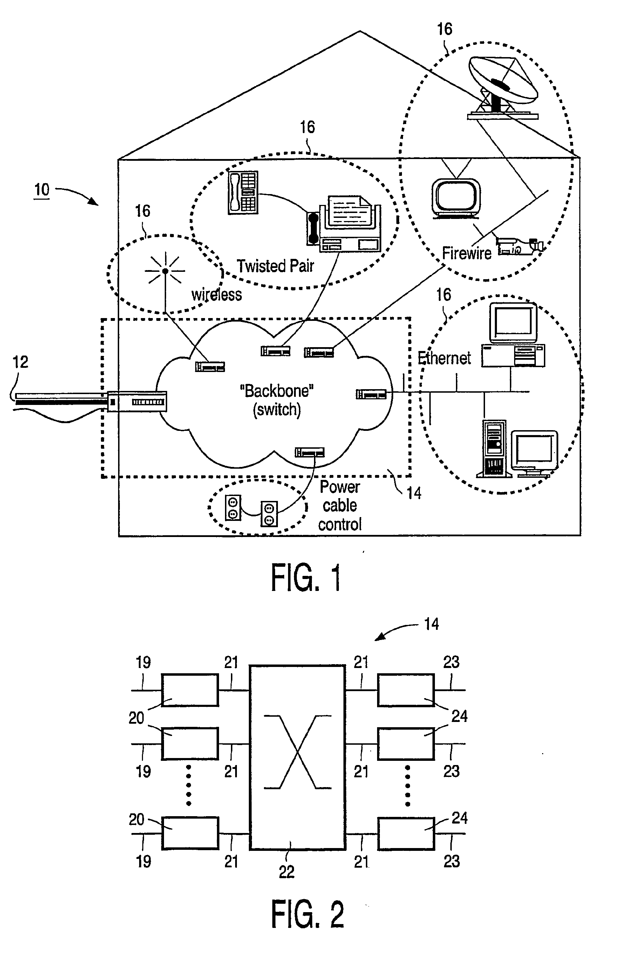

One of the solutions to these problems is the concept of a residential gateway as illustrated by Figure 1 which shows schematically an embodiment of a transmission system 10 according to the invention. The transmission system 10 comprises a residential gateway 14 which interconnects a number of access networks or first networks 12 (e.g. optical fiber, coax cable and/or twisted pair access networks) and a number of in-home networks or second networks 16 (e.g. wireless, twisted pair, IEEE1394/firewire and/or Ethernet in-home networks). The residential gateway 14 is an intelligent cross-connect which provides an interconnection between access networks 12 and in-home networks (IHN) 16. It bridges the differences between various network technologies.

Figure 2 shows a block diagram of an embodiment of a residential gateway 14 according to the invention. From an architectural point of view, the residential gateway 14 consists of a 'backbone' (i.e. transmitting technology) or interconnection means 22 and a set of interfaces (adapters) or quality of service translation means 20,24 to both in-home and access networks. The backbone 22 is a transmission technology which passes information between the first and second quality of service translation means 20,24. These interfaces 20,24 transform incoming data into a format suitable for transmission over the backbone 22, and after the transmission into a format suitable for the destination network 12 or 16.

The backbone may be implemented as a network, a bus or a switch. In addition, it should preferably be possible to change the backbone technology even when the residential gateway 14 is already installed and operational. This means that the functionality of the interfacing modules 20,24 must be designed in a manner that will work with different types of backbone technologies. (Of course, the physical interfaces of the adaptation modules 20,24 must be changed when the backbone technology is changed.)

The residential gateway 14 may have different topologies. The backbone 22 and the interfaces 20,24 may be built into a single device or the backbone 22 may be spread over a residence area. The residential gateway 14 is preferably designed in such a way that both options are easy to implement using the same hardware.

From an architectural point of view, the residential gateway 14 may also be seen as a switch 22 with a set of interfaces (adaptation modules) 20,24 to various networks 12,16 as is shown in Figure 2. The interfaces 20,24 are interconnected by the switch 22. Input data 19 having an associated input quality of service are received by one of the interfaces 20 (or 24) from the first network 12 (or the second network 16). This receiving interface 20 (or 24) thereafter translates the input data 19 into interconnection data 21 having an associated interconnection quality of service and supplies these interconnection data 21 to the switch (interconnection means) 22. The switch 22 receives the interconnection data 21 from the interface 20 (or 24) and supplies the interconnection data 21 to the other interface 24 (or 20), which receives the interconnection data 21 from the switch 22 and which translates the interconnection data 21 into output data 23 having an associated output quality of service. Finally, the other interface 24 (or 20) supplies the output data 23 to the second network 16 (or the first network 12).

In general, the various access and in-home networks, and the switching technology do not have the same characteristics. An important characteristic that can differ substantially, is the supported set of Quality of Services (QoS). Obviously, the gateway/router 14 may not degrade the QoS provided to a certain connection, while it converts the protocol stack of the source network 12 to the protocol stack of the destination network 16.

Suppose that a certain connection at the source network 12 uses a certain input quality of service, say QoS₁. The gateway/router 14 has to map (by means of the quality of service translation means 20) this QoS₁ to a interconnection quality of service of the switching technology inside the gateway/router 14, say QoS₂. Because the QoS may not degrade, QoS₂ is at least equal to QoS₁. In the same way, the output quality of service (QoS₃) at the destination network 16 has to be equal or higher than the QoS in the gateway: QoS₃ (which is derived from QoS₂ by means of the quality of service translation means 24) is at least equal to QoS₂.

Thus: QoS₃ is equal to or higher than QoS₂, and QoS₂ is equal to or higher than QoS₁. All three quality of services QoS₁, QoS₂ and QoS₃ are equal only if the source network 12, the destination network 16, and the gateway 14 provide exactly the same set of quality of services. Obviously, this is in general not the case. So, as a consequence of these unequal QoS sets used by the different networks 12,16 and the gateway 14, the protocol translation will result in a too high QoS chosen on the destination network 16. On the other hand, to perform this QoS conversion in an efficient way, the switching technology 22 in the gateway/router 14 has to provide a large set of QoS. This set of QoS has to be chosen in such a way that they are close to the QoS of the source and destination network 12,16. Apparently, this makes the switching technology 22 complicated and expensive.

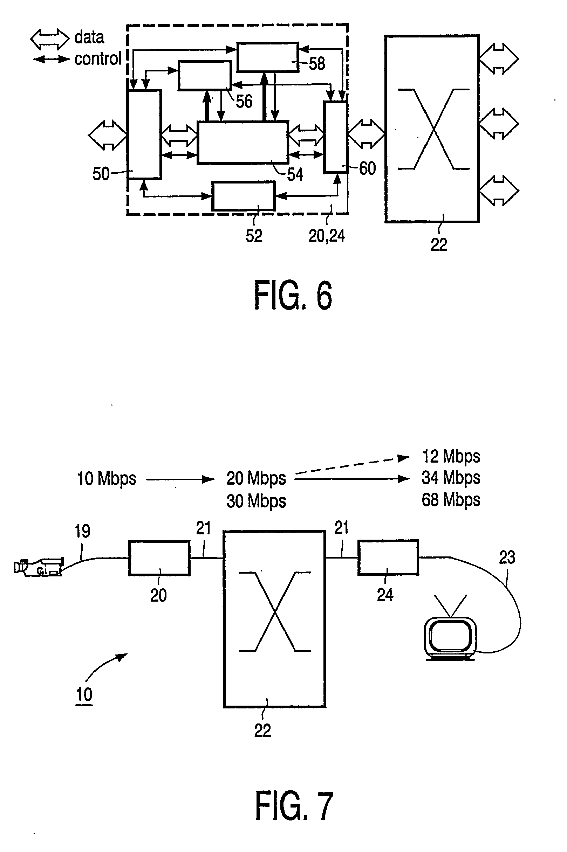

It is an object of the invention to provide a gateway as described in the opening paragraph which is able to perform the above mentioned QoS conversion in an efficient way while having a switching technology wich supports only a relatively small set of QoS. This object is achieved in the gateway according to the invention, which gateway is characterized in that the interconnection data further comprise information representative of the input quality of service and in that the second quality of service translation means are arranged for translating the interconnection data into the output data in dependence on the information. By incorporating information representative of the input quality of service, e.g. the original input quality of service parameter(s), in the interconnection data this information is passed to the second quality of service translation means which can use this information for an efficient translation of the interconnection data into the output data. This concept will now be explained by means of Figure 7 which shows schematically an embodiment of a transmission system 10 according to the invention. Input data 19 (e.g. video data from a video camera) are received by a first quality of service translation means 20 from a first network 12 (not shown). The input data 19 have a certain input quality of service, e.g. a data rate of 10 Mbps. Next, these input data 19 are translated by the first quality of service translation means 20 into interconnection data 21 having an interconnection quality of service which is supported by the interconnection means 22 and which is at least as good as the input quality of service of 10 Mbps. Suppose that the interconnection means 22 support an interconnection quality of service of 20 Mbps and an interconnection quality of service of 30 Mbps. In this case the first quality of service translation means 20 will translate the input data 19 having the input quality of service of 10 Mbps into interconnection data 21 having the nearest interconnection quality of service of 20 Mbps. The interconnection data 21 are thereafter passed (i.e. routed/switched) by the interconnection means 22 to the second quality of service translation means 24 which has to map the interconnection data 21 onto a service available in the second network 16 (not shown). Suppose that the second network 16 supports data traffic of 12 Mbps, 34 Mbps and 68 Mbps. In the gateway according to the invention the second quality of service translation means 24 makes use of the information representative of the input quality of service which is included in the interconnection data 21 to translate the interconnection data 21 having the interconnection quality of service of 20 Mbps into output data having an output quality of service that best matches the input quality of service of 10 Mbps, i.e. an output quality of service of 12 Mbps (the nearest quality of service higher than 10 Mbps). If the inventive concept were not used, the second quality of service translation means 24 would translate the interconnection data 21 having the interconnection quality of service of 20 Mbps into output data having an output quality of service of 34 Mbps, i.e. the nearest quality of service higher than 20 Mbps.

An embodiment of the gateway according to the invention is characterized in that the first quality of service translation means are arranged for mapping the input quality of service onto a translation parameter of a set of translation parameters, wherein the information comprises the translation parameter. This has the advantage that a mapping of services must not be defined for each pair of networks (which would lead to a large set of mappings), and that when a new network technology is introduced, no new mappings have to be specified and all adaptation modules do not have to be updated. By introducing an intermediate set of parameters for the translation, which set is preferably large and detailed so that it can describe parameters of any traffic class provided by any one of the connected networks the traffic coming from the source network can be mapped (by the first quality of service translation means) on this proprietary set and this information will be passed to the second quality of service translation means connected to the destination network. In this way there is no need for mapping between all pairs of handled QoS parameters: the only mapping is to and from the intermediate set. It is to be noted that this intermediate set of QoS parameters is used only for mapping the traffic characteristics between the source and destination networks. The backbone technology does not need to handle all these different classes of service. For the transmission over the backbone, the incoming traffic is mapped on one of the available services but this process is invisible from outside the gateway.

US 6,175,569 discloses a system in which an asynchronous transfer mode network quality of service is guaranteed to token ring LAN. A LAN station requesting for a connection through an ATM network to either a remote ATM station or a remote LAN station sends a frame having an encoded priority value to a LAN/ATM interface device. The interface device maps the priority value to one of the standard ATM traffic classes. The LAN/ATM interface device attempts to set up a connection through the ATM network confirming the mapped class or QoS.

The above object and features of the present invention will be more apparent from the following description of the preferred embodiments with reference to the drawings, wherein:
Figures 1 and 7 show schematically an embodiment of a transmission system 10 according to the invention,
Figure 2 shows a block diagram of an embodiment of a gateway 2 according to the invention,
Figure 3 shows a protocol stack illustrating the operation of a quality of service translation means 20, 24 as used in the present invention,
Figures 4 and 6 show block diagrams of a part of the gateway 14 according to the invention,
Figure 5 shows two protocol stacks illustrating the operation of a quality of service translation means 20,24 as used in the present invention.

In the Figures, identical parts are provided with the same reference numbers.

Figure 1 shows schematically an embodiment of a transmission system 10 according to the invention. The transmission system 10 comprises a residential gateway 14 which interconnects a number of access networks or first networks 12 (e.g. optical fiber, coax cable and/or twisted pair access networks) and a number of in-home networks or second networks 16 (e.g. wireless, twisted pair, IEEE1394/firewire and/or Ethernet in-home networks). The residential gateway 14 is an intelligent cross-connect which provides an interconnection between access networks 12 and in-home networks (IHN) 16. It bridges the differences between various network technologies.

Figure 2 shows a block diagram of an embodiment of a residential gateway 14 according to the invention. From an architectural point of view, the residential gateway 14 consists of a'backbone' (i.e. transmitting technology) or interconnection means 22 and a set of interfaces (adapters) or quality of service translation means 20,24 to both in-home and access networks. The backbone 22 is a transmission technology which passes information between the first and second quality of service translation means 20,24. These interfaces 20,24 transform incoming data into a format suitable for transmission over the backbone 22, and after the transmission into a format suitable for the destination network 12 or 16.

The backbone may be implemented as a network, a bus or a switch. In addition, it should preferably be possible to change the backbone technology even when the residential gateway 14 is already installed and operational. This means that the functionality of the interfacing modules 20,24 must be designed in a manner that will work with different types of backbone technologies. (Of course, the physical interfaces of the adaptation modules 20,24 must be changed when the backbone technology is changed.)

The residential gateway 14 may have different topologies. The backbone 22 and the interfaces 20,24 may be built into a single device or the backbone 22 may be spread over a residence area. The residential gateway 14 is preferably designed in such a way that both options are easy to implement using the same hardware.

From an architectural point of view, the residential gateway 14 may also be seen as a switch 22 with a set of interfaces (adaptation modules) 20,24 to various networks 12,16 as is shown in Figure 2. The interfaces 20,24 are interconnected by the switch 22. Input data 19 having an associated input quality of service are received by one of the interfaces 20 (or 24) from the first network 12 (or the second network 16). This receiving interface 20 (or 24) thereafter translates the input data 19 into interconnection data 21 having an associated interconnection quality of service and supplies these interconnection data 21 to the switch (interconnection means) 22. The switch 22 receives the interconnection data 21 from the interface 20 (or 24) and supplies the interconnection data 21 to the other interface 24 (or 20), which receives the interconnection data 21 from the switch 22 and which translates the interconnection data 21 into output data 23 having an associated output quality of service. Finally, the other interface 24 (or 20) supplies the output data 23 to the second network 16 (or the first network 12).

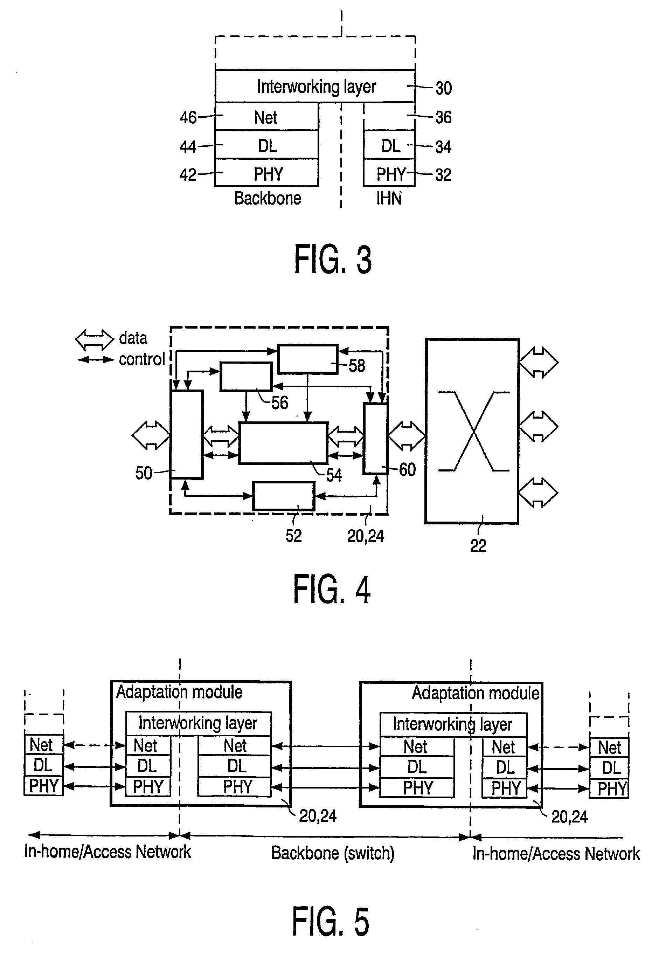

Figure 3 shows a protocol stack illustrating the operation of a quality of service translation means 20,24 as used in the present invention. The quality of service translation means 20,24 'bridges' the differences between connected technologies. From the architectural (OSI) point of view, this bridging means introducing a new layer, a so called interworking layer 30, on top of the existing protocol stacks of the interconnection means/backbone 22 (i.e. physical layer 42, data link layer 44 and network layer 46) and of the networks 12,16 (i.e. physical layer 32, data link layer 34 and network layer 36 which may not be present in certain networks). The interworking layer 30 is responsible for adapting the traffic going from one network to another according to the technologies of these networks.

The exact functionality of the quality of service translation means 20,24 depends on the pair of connected networks but includes:
- Quality of Service (QoS) translation. In general, networks may provide different types of services. Thus, a process of translation between them is needed. It must be designed in a way that the QoS is not decreased.
- Routing. The information must be routed to a particular destination network and a particular terminal. The addresses must be translated between the source and destination networks.
- Data adaptation and buffering. In general, all networks may have different packet sizes and formats, and provide different bandwidths. Thus, the incoming data must be adapted to the format acceptable on the destination network.

Figure 4 shows a block diagram of a part of the gateway 14 according to the invention. The quality of service translation means 20,24 comprise a network termination 50 and a backbone termination 60 which act as terminals for receiving and supplying data. The quality of service translation means 20,24 further comprise a data adaptation block 54 which converts the format of the transmitted data. Its task is in fact protocol translation. The way the format is converted is chosen using two blocks: a service selection block 56 and a QoS translation block 58.These two blocks 56,58 have connections to both termination blocks 50,60 from which they gather information about the parameters of the traffic coming from the source network and services available on the destination network. This information is required to choose the service for data transmission on the destination network. Once the decision is made, the data adaptation block 54 is instructed how the adaptation has to be done. Furthermore, an address translation block 52 is included in the quality of service translation means 20,24 for translating addresses. It is only connected to the termination blocks 50,60 because these are the places where the addresses are needed.

Figure 5 shows two protocol stacks illustrating the operation of a quality of service translation means 20,24 as used in the present invention. In this configuration the gateway's task is just to transport the data between connected networks, not necessarily in an optimal way. Within the backbone 22 the stack is three layers high. The network layer is needed for routing between connected networks. In case of a simple backbone 22, the network layer will be trivial but the functionality has to be present anyway. The Interworking layer may be placed on top of the third layer of the stack of the network that is being interfaced, but it is also possible that the network technology does not provide a layer 3. In this case the Interworking layer may be placed on top of a data link layer of the network.

In the quality of service translation means 20,24 as shown in Figure 4 the choices of the required service and QoS were made according to the parameters of the incoming data traffic. This approach works well if the network from which the data is coming provides a detailed set of QoS parameters. In this case the chosen QoS describes the data in terms of the required resources. However, in case of simple network technologies which do not provide QoS or when the set provided is limited, it is very likely that the original data stream is not carried by the source network in the optimal way. In this case, the choice of the service in a destination network based only on the parameters of the traffic provided by the source network may add additional overhead and the service may become even more over-dimensioned. An example of such a situation is described below.

Suppose that a user wants to watch a movie. Moreover, suppose that the movie is MPEG-encoded (with variable bit rate VBR) but the source network supports only a constant bit rate (CBR) service. Then, for the transmission over this network a constant bit rate service must be chosen with the bandwidth equal to the peak bandwidth of the transmitted stream. Now, in the setup of Figure 4, the quality of service translation means 20,24 will ask for the CBR service for transmission over the backbone even if a variable bit rate (VBR) service is available. The required bandwidth will be equal or, if the equal is not available, higher than the incoming one. The same procedure will be repeated by the adaptation module between the backbone and a destination network even if a VBR service is available on the latter.

In order to improve the performance of the translation, the type of the transmitted data may be taken into account by the quality of service translation means 20,24 such as shown in Figure 6. Figure 6 shows a block diagram of a part of the gateway 14 according to the invention and is similar to Figure 4. The difference between Figures 4 and 6 is that there is in the quality of service translation means 20,24 of Figure 6 a data flow coming from the data adaptation block 54 towards the QoS translation block 58 and the service selection block 56. This means that these blocks 56,58 take the data contents into account before making decisions.

Figure 7 shows schematically an embodiment of a transmission system 10 according to the invention. Input data 19 (e.g. video data from a video camera) are received by a first quality of service translation means 20 from a first network 12 (not shown). The input data 19 have a certain input quality of service, e.g. a data rate of 10 Mbps. Next, these input data 19 are translated by the first quality of service translation means 20 into interconnection data 21 having an interconnection quality of service which is supported by the interconnection means 22 and which is at least as good as the input quality of service of 10 Mbps. Suppose that the interconnection means 22 support an interconnection quality of service of 20 Mbps and an interconnection quality of service of 30 Mbps. In this case the first quality of service translation means 20 will translate the input data 19 having the input quality of service of 10 Mbps into interconnection data 21 having the nearest interconnection quality of service of 20 Mbps. The interconnection data 21 are thereafter passed (i.e. routed/switched) by the interconnection means 22 to the second quality of service translation means 24 which has to map the interconnection data 21 onto a service available in the second network 16 (not shown). Suppose that the second network 16 supports data traffic of 12 Mbps, 34 Mbps and 68 Mbps. In the gateway according to the invention the second quality of service translation means 24 makes use of the information representative of the input quality of service which is included in the interconnection data 21 to translate the interconnection data 21 having the interconnection quality of service of 20 Mbps into output data having an output quality of service that best matches the input quality of service of 10 Mbps, i.e. an output quality of service of 12 Mbps (the nearest quality of service higher than 10 Mbps). If the inventive concept were not used, the second quality of service translation means 24 would translate the interconnection data 21 having the interconnection quality of service of 20 Mbps into output data having an output quality of service of 34 Mbps, i.e. the nearest quality of service higher than 20 Mbps.

Although in the above mainly a gateway 14 handling data traffic from a first network 12 to a second network 16 is described, the invention is also applicable to gateways 14 handling traffic from the second network 16 to the first network 12 or to gateways 14 handling traffic in both directions or to gateways 14 that handle data traffic between two second networks 16, e.g. between two separate in-home networks 16. The gateway 14 may be implemented by means of digital hardware and/or by means of software which is executed by a digital signal processor or by a microprocessor.

The invention is embodied in each new characteristic and each combination of characteristics. Any reference signs do not limit the scope of the claims. The word "comprising" does not exclude the presence of other elements or steps than those listed in a claim. Use of the word "a" or "an" preceding an element does not exclude the presence of a plurality of such elements.

## Claims

1. A gateway (14) for interconnecting first and second networks (12,16), the gateway (14) comprising first and second quality of service translation means (20,24) and interconnection means (22) for interconnecting the first and second quality of service translation means (20,24), wherein the first quality of service translation means (20) are arranged for receiving input data (19) having an associated input quality of service from the first network (12) and for translating the input data (19) into interconnection data (21) having an associated interconnection quality of service, and wherein the first quality of service translation means (20) are further arranged for supplying the interconnection data (21) to the interconnection means (22), wherein the interconnection means (22) are arranged for receiving the interconnection data (21) from the first quality of service translation means (20) and for supplying the interconnection data (21) to the second quality of service translation means (24), and wherein the second quality of service translation means (24) are arranged for receiving the interconnection data (21) from the interconnection means (22) and for translating the interconnection data (21) into output data (23) having an associated output quality of service, wherein the second quality of service translation means (24) are further arranged for supplying the output data (23) to the second network (16), **characterized in that** the interconnection data (21) further comprise information representative of the input quality of service and **in that** the second quality of service translation means (24) are arranged for translating the interconnection data (21) into the output data (23) in dependence on the information.

2. The gateway (14) according to claim 1, **characterized in that** the information comprises the input quality of service.

3. The gateway (14) according to claim 1, **characterized in that** the first quality of service translation means (20) are arranged for mapping the input quality of service onto a translation parameter of a set of translation parameters, wherein the information comprises the translation parameter.

4. A transmission system (10) comprising a gateway (14) for interconnecting first and second networks (12,16), the gateway (14) comprising first and second quality of service translation means (20,24) and interconnection means (22) for interconnecting the first and second quality of service translation means (20,24), wherein the first quality of service translation means (20) are arranged for receiving input data (19) having an associated input quality of service from the first network (12) and for translating the input data (19) into interconnection data (21) having an associated interconnection quality of service, and wherein the first quality of service translation means (20) are further arranged for supplying the interconnection data (21) to the interconnection means (22), wherein the interconnection means (22) are arranged for receiving the interconnection data (21) from the first quality of service translation means (20) and for supplying the interconnection data (21) to the second quality of service translation means (24), and wherein the second quality of service translation means (24) are arranged for receiving the interconnection data (21) from the interconnection means (22) and for translating the interconnection data (21) into output data (23) having an associated output quality of service, wherein the second quality of service translation means (24) are further arranged for supplying the output data (23) to the second network (16), **characterized in that** the interconnection data (21) further comprise information representative of the input quality of service and **in that** the second quality of service translation means (24) are arranged for translating the interconnection data (21) into the output data (23) in dependence on the information.

5. The transmission system (10) according to claim 4, **characterized in that** the information comprises the input quality of service.

6. The transmission system (10) according to claim 4, **characterized in that** the first quality of service translation means (20) are arranged for mapping the input quality of service onto a translation parameter of a set of translation parameters, wherein the information comprises the translation parameter.

7. A method of interconnecting first and second (12,16) networks, the method comprising:
- receiving input data (19) having an associated input quality of service from the first network (12),
- translating the input data (19) into interconnection data (21) having an associated interconnection quality of service,
- translating the interconnection data (21) into output data (23) having an associated output quality of service,
- supplying the output data (23) to the second network (16), **characterized in that** the interconnection data (21) further comprise information representative of the input quality of service and **in that** the method further comprises translating the interconnection data (21) into the output data (23) in dependence on the information.

8. The method of interconnecting first and second networks (12,16) according to claim 7, **characterized in that** the information comprises the input quality of service.

9. The method of interconnecting first and second networks (12,16) according to claim 7, **characterized in that** the method comprises mapping the input quality of service onto a translation parameter of a set of translation parameters, wherein the information comprises the translation parameter.

## Patentansprüche

1. Gateway (14) zum Verbinden eines ersten und zweiten Netzes (12,16), wobei das Gateway (14) Konvertierungsmittel (20,24) erster und zweiter Dienstgüte sowie Verbindungsmittel (22) zum Verbinden der Konvertierungsmittel (20,24) erster und zweiter Dienstgüte umfasst, wobei die Konvertierungsmittel (20) erster Dienstgüte so vorgesehen sind, dass sie Eingangsdaten (19) mit einer zugeordneten Eingangsdienstgüte von dem ersten Netz (12) empfangen und die Eingangsdaten (19) in Verbindungsdaten (21) mit einer zugeordneten Verbindungsdienstgüte konvertieren, und wobei die Konvertierungsmittel (20) erster Dienstgüte weiterhin so vorgesehen sind, dass sie die Verbindungsdaten (21) den Verbindungsmitteln (22) zuführen, wobei die Verbindungsmittel (22) so vorgesehen sind, dass sie die Verbindungsdaten (21) von den Konvertierungsmitteln (20) erster Dienstgüte empfangen und die Verbindungsdaten (21) den Konvertierungsmitteln (24) zweiter Dienstgüte zuführen, und wobei die Konvertierungsmittel (24) zweiter Dienstgüte so vorgesehen sind, dass sie die Verbindungsdaten (21) von den Verbindungsmitteln (22) empfangen und die Verbindungsdaten (21) in Ausgangsdaten (23) mit einer zugeordneten Ausgangsdienstgüte konvertieren, wobei die Konvertierungsmittel (24) zweiter Dienstgüte weiterhin so vorgesehen sind, dass sie die Ausgangsdaten (23) dem zweiten Netz (16) zuführen, **dadurch gekennzeichnet, dass** die Verbindungsdaten (21) weiterhin Informationen umfassen, welche die Eingangsdienstgüte darstellen, und dass die Konvertierungsmittel (24) zweiter Dienstgüte so vorgesehen sind, dass sie die Verbindungsdaten (21) in Abhängigkeit der Informationen in die Ausgangsdaten (23) konvertieren.

2. Gateway (14) nach Anspruch 1, **dadurch gekennzeichnet, dass** die Informationen die Eingangsdienstgüte umfassen.

3. Gateway (14) nach Anspruch 1, **dadurch gekennzeichnet, dass** die Konvertierungsmittel (20) erster Dienstgüte so vorgesehen sind, dass sie die Eingangsdienstgüte auf einen Konvertierungsparameter eines Konvertierungsparametersatzes abbilden, wobei die Informationen den Konvertierungsparameter umfassen.

4. Übertragungssystem (10) mit einem Gateway (14) zum Verbinden des ersten und zweiten Netzes (12,16), wobei das Gateway (14) Konvertierungsmittel (20,24) erster und zweiter Dienstgüte sowie Verbindungsmittel (22) zum Verbinden der Konvertierungsmittel (20,24) erster und zweiter Dienstgüte umfasst, wobei die Konvertierungsmittel (20) erster Dienstgüte so vorgesehen sind, dass sie Eingangsdaten (19) mit einer zugeordneten Eingangsdienstgüte von dem ersten Netz (12) empfangen und die Eingangsdaten (19) in Verbindungsdaten (21) mit einer zugeordneten Verbindungsdienstgüte konvertieren, und wobei die Konvertierungsmittel (20) erster Dienstgüte weiterhin so vorgesehen sind, dass sie die Verbindungsdaten (21) den Verbindungsmitteln (22) zuführen, wobei die Verbindungsmittel (22) so vorgesehen sind, dass sie die Verbindungsdaten (21) von den Konvertierungsmitteln (20) erster Dienstgüte empfangen und die Verbindungsdaten (21) den Konvertierungsmitteln (24) zweiter Dienstgüte zuführen, und wobei die Konvertierungsmittel (24) zweiter Dienstgüte so vorgesehen sind, dass sie die Verbindungsdaten (21) von den Verbindungsmitteln (22) empfangen und die Verbindungsdaten (21) in Ausgangsdaten (23) mit einer zugeordneten Ausgangsdienstgüte konvertieren, wobei die Konvertierungsmittel (24) zweiter Dienstgüte weiterhin so vorgesehen sind, dass sie die Ausgangsdaten (23) dem zweiten Netz (16) zuführen, **dadurch gekennzeichnet, dass** die Verbindungsdaten (21) weiterhin Informationen umfassen, welche die Eingangsdienstgüte darstellen, und dass die Konvertierungsmittel (24) zweiter Dienstgüte so vorgesehen sind, dass sie die Verbindungsdaten (21) in Abhängigkeit der Informationen in die Ausgangsdaten (23) konvertieren.

5. Übertragungssystem (10) nach Anspruch 4, **dadurch gekennzeichnet, dass** die Informationen die Eingangsdienstgüte umfassen.

6. Übertragungssystem (10) nach Anspruch 4, **dadurch gekennzeichnet, dass** die Konvertierungsmittel (20) erster Dienstgüte so vorgesehen sind, dass sie die Eingangsdienstgüte auf einen Konvertierungsparameter eines Konvertierungsparametersatzes abbilden, wobei die Informationen den Konvertierungsparameter umfassen.

7. Verfahren zum Verbinden des ersten und zweiten (12,16) Netzes, wobei das Verfahren die folgenden Schritte umfasst:
- Empfangen von Eingangsdaten (19) mit einer zugeordneten Eingangsdienstgüte von dem ersten Netz (12),
- Konvertieren der Eingangsdaten (19) in Verbindungsdaten (21) mit einer zugeordneten Verbindungsdienstgüte,
- Konvertieren der Verbindungsdaten (21) in Ausgangsdaten (23) mit einer zugeordneten Ausgangsdienstgüte,
- Zuführen der Ausgangsdaten (23) zu dem zweiten Netz (16), **dadurch gekennzeichnet, dass** die Verbindungsdaten (21) weiterhin Informationen umfassen, welche die Eingangsdienstgüte darstellen, und dass das Verfahren weiterhin das Konvertieren der Verbindungsdaten (21) in die Ausgangsdaten (23) in Abhängigkeit der Informationen umfasst.

8. Verfahren zum Verbinden des ersten und zweiten Netzes (12,16) nach Anspruch 7, **dadurch gekennzeichnet, dass** die Informationen die Eingangsdienstgüte umfassen.

9. Verfahren zum Verbinden des ersten und zweiten Netzes (12, 16) nach Anspruch 7, **dadurch gekennzeichnet, dass** das Verfahren das Abbilden der Eingangsdienstgüte auf einen Konvertierungsparameter eines Konvertierungsparametersatzes umfasst, wobei die Informationen den Konvertierungsparameter umfassen.

## Revendications

1. Passerelle (14) pour interconnecter des premier et deuxième réseaux (12, 16), la passerelle (14) comprenant une première et une deuxième qualité de moyens de traduction de service (20, 24) et des moyens d'interconnexion (22) pour interconnecter la première et la deuxième qualité de moyens de traduction de service (20, 24), dans laquelle la première qualité de moyens de traduction (20) est agencée de manière à recevoir des données d'entrée (19) ayant une qualité d'entrée associée de service en provenance du premier réseau (12) et à traduire les données d'entrée (19) en des données d'interconnexion (21) ayant une qualité d'interconnexion associée de service et dans laquelle la première qualité de moyens de traduction de service (20) est encore agencée de manière à fournir les données d'interconnexion (21) aux moyens d'interconnexion (22), dans laquelle les moyens d'interconnexion (22) sont agencés de manière à recevoir les données d'interconnexion (21) en provenance de la première qualité de moyens de traduction de service (20) et à fournir les données d'interconnexion (21) à la deuxième qualité de moyens de traduction de service (24), et dans laquelle la deuxième qualité de moyens de traduction de service (24) est agencée de manière à recevoir les données d'interconnexion (21) en provenance des moyens d'interconnexion (22) et à traduire les données d'interconnexion (21) en des données de sortie (23) ayant une qualité de sortie associée de service, dans laquelle la deuxième qualité de moyens de traduction de service (24) est encore agencée de manière à fournir les données de sortie (23) au deuxième réseau (16), **caractérisée en ce que** les données d'interconnexion (21) comprennent encore de l'information qui est représentative de la qualité d'entrée de service et **en ce que** la deuxième qualité de moyens de traduction de service (24) est agencée de manière à traduire les données d'interconnexion (21) en données de sortie (23) dépendamment de l'information.

2. Passerelle (14) selon la revendication 1, **caractérisée en ce que** l'information comprend la qualité d'entrée de service.

3. Passerelle (14) selon la revendication 1, **caractérisée en ce que** la première qualité de moyens de traduction de service (20) est agencée de manière à mapper la qualité d'entrée de service sur un paramètre de traduction d'un ensemble de paramètres de traduction, dans laquelle l'information comprend le paramètre de traduction.

4. Système de transmission (10) comprenant une passerelle (14) pour interconnecter des premier et deuxième réseaux (12, 16), la passerelle (14) comprenant une première et une deuxième qualité de moyens de traduction de service (20, 24) et des moyens d'interconnexion (22) pour interconnecter la première et la deuxième qualité de moyens de traduction de service (20, 24), dans lequel la première qualité de moyens de traduction de service (20) est agencée de manière à recevoir des données d'entrée (19) ayant une qualité d'entrée associée de service en provenance du premier réseau (12) et à traduire les données d'entrée (19) en des données d'interconnexion (21) ayant une qualité d'interconnexion associée de service et dans lequel la première qualité de moyens de traduction de service (20) est encore agencée de manière à fournir les données d'interconnexion (21) aux moyens d'interconnexion (22), dans lequel les moyens d'interconnexion (22) sont agencés de manière à recevoir les données d'interconnexion (21) en provenance de la première qualité de moyens de traduction de service (20) et à fournir les données d'interconnexion (21) à la deuxième qualité de moyens de traduction de service (24), et dans lequel la deuxième qualité de moyens de traduction de service (24) est agencé de manière à recevoir les données d'interconnexion (21) en provenance des moyens d'interconnexion (22) et à traduire les données d'interconnexion (21) en des données de sortie (23) ayant une qualité de sortie associée de service, dans lequel la deuxième qualité de moyens de traduction de service (24) est encore agencée de manière à fournir les données de sortie (23) au deuxième réseau (16), **caractérisé en ce que** les données d'interconnexion (21) comprennent encore de l'information qui est représentative de la qualité de service et **en ce que** la deuxième qualité de moyens de traduction de service (24) est agencée de manière à traduire les données d'interconnexion (21) en données de sortie (23) dépendamment de l'information.

5. Système de transmission (10) selon la revendication 4, **caractérisé en ce que** l'information comprend la qualité d'entrée de service.

6. Système de transmission (10) selon la revendication 4, **caractérisé en ce que** la première qualité de moyens de traduction de service (20) est agencée de manière à mapper la qualité d'entrée de service sur un paramètre de traduction d'un ensemble de paramètres de traduction, dans lequel l'information comprend le paramètre de traduction.

7. Procédé d'interconnexion des premier et deuxième réseaux (12, 16), le procédé comprenant les étapes suivantes consistant à:
- recevoir des données d'entrée (19) ayant une qualité d'entrée associée de service en provenance du premier réseau (12),
- traduire les données d'entrée (19) en des données d'interconnexion (21) ayant une qualité d'interconnexion associée de service,
- traduire les données d'interconnexion (21) en des données de sortie (23) ayant une qualité de sortie associée de service,
- fournir les données de sortie (23) au deuxième réseau (16), **caractérisé en ce que** les données d'interconnexion (21) comprennent encore de l'information qui est représentative de la qualité d'entrée de service et **en ce que** le procédé comprend encore la traduction des données d'interconnexion (21) en données de sortie (23) dépendamment de l'information.

8. Procédé d'interconnexion des premier et deuxième réseaux (12, 16) selon la revendication 7, **caractérisé en ce que** l'information comprend la qualité d'entrée de service.

9. Procédé d'interconnexion des premier et deuxième réseaux (12, 16) selon la revendication 7, **caractérisé en ce que** le procédé comprend le mappage de la qualité d'entrée de service sur un paramètre de traduction d'un ensemble de paramètres de traduction, dans lequel l'information comprend le paramètre de traduction.
